# EUROPEAN PATENT APPLICATION

(11) **EP 2 422 957 A1**
(43) Date of publication of application: **29.02.2012**
(21) Application number: 11178930.1
(22) Date of filing: 25.08.2011
(51) Int. Cl.: B29C 65/00, B29C 65/48, G02B 7/02, G02B 7/08, G02B 13/00

(54) **Driver module and electronic device**

(30) Priority: 25.08.2010 JP 2010188728
(71) Applicant: Seiko Instruments Inc., Chiba-shi, Chiba (JP)
(72) Inventor: Kotanagi, Susumu, Chiba-shi,, Chiba (JP)
(74) Representative: Cloughley, Peter Andrew

(57) **Abstract**

A driving module 1 includes: a support member 5 fixed on a base substrate 8; a driven member 4 arranged so as to be movable back and forth in relation to the support member; driving means 10 for driving the driven member; and an exterior cover 11 attached so as to cover the support member, the driven member, and the driving means and attached and fixed to the base substrate. A projection piece 45 which is accommodated in a concave accommodation portion 50 is formed on the base substrate. The base substrate and the exterior cover are attached and fixed by an adhesive agent filled in a first filling region which is defined between a lateral inner wall 51 and the projection piece and a second filling region which is defined between an upper inner wall 52 and the projection piece. A lateral step portion 55 which is formed to be recessed in a state of being continuous to the lateral inner wall of the concave accommodation portion and to which the adhesive agent running out of the first filling region is guided is formed on the exterior cover.

## Description

The invention relates to a driving module and an electronic device.

Particularly, the invention relates to a driving module which is suitable for driving an optical system and a movable member to perform focus position adjustment and which is suitably used as an actuator, and an electronic device.

In the related art, in compact electronic devices such as a mobile camera phone, various driving modules which perform driving using the flexibility of a shape memory alloy wire have been proposed in order to drive a driven member such as an imaging lens unit to perform autofocus, zooming, and the like (see JP-A-2009-128708 (Patent Reference 1)).

The driving module disclosed in Patent Reference 1 includes a support member fixed to the lower module plate, a lens frame capable of moving back and forth in a certain direction with respect to the support member, a plate spring member that elastically holds the lens frame, and driving means that drives the lens frame while resisting the elastic restoring force of the plate spring member.

Moreover, the respective components of the support member, the lens frame, the plate spring member, and the driving means are covered by a cylindrical cover with a top and are in a state of being protected by the cover. In this case, the cover is fixed to the lower module plate and functions as an exterior body of the driving module.

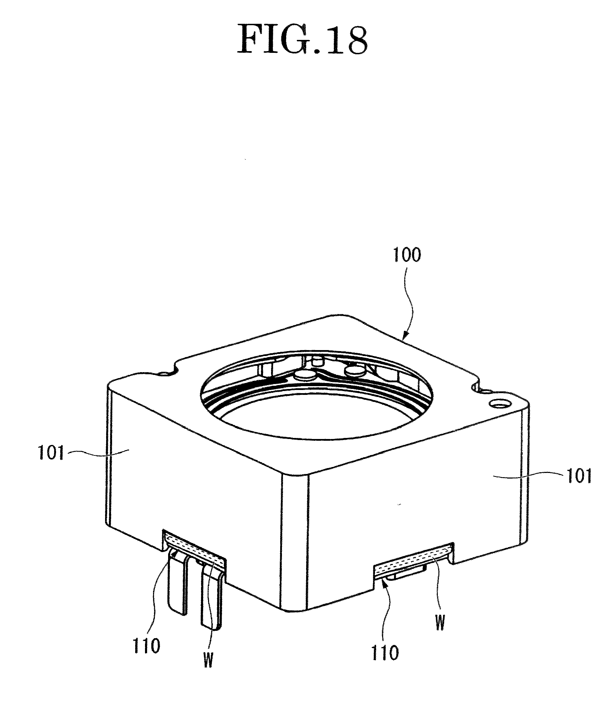

However, in general, in a driving module, as shown in Fig. 18, in many cases, the cover 100 is assembled with the lower module plate 110 so as to surround the lower module plate 110 from the outer side in the radial direction, and is attached and fixed using an adhesive agent W.

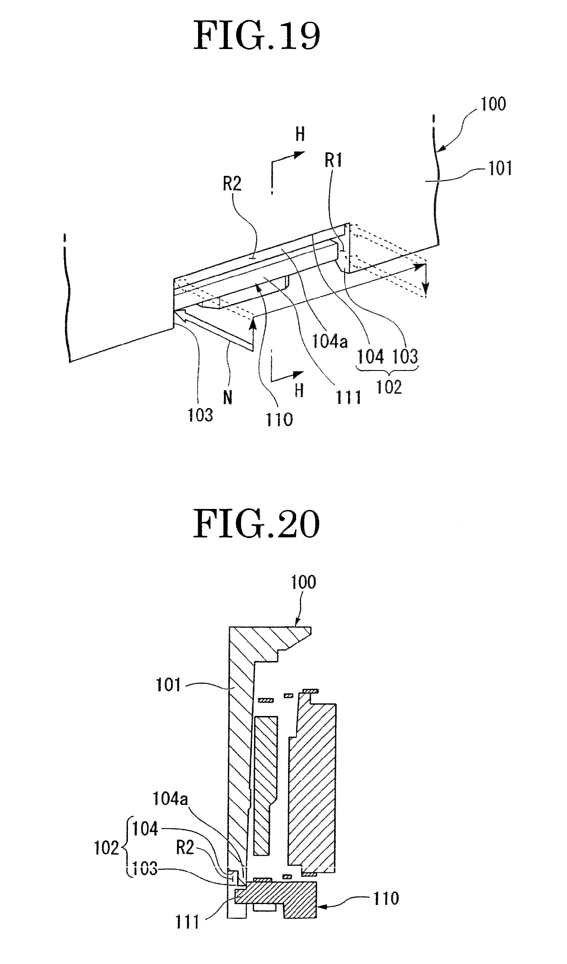

This will be described in detail below. As shown in Figs. 19 and 20, a concave accommodation portion 102 that is open to the lower side is formed at the central portion on the lower end side of each peripheral wall 101 of the cover 100. On the other hand, a projection piece 111 which projects outward in the radial direction and which is accommodated in each concave accommodation portion 102 of the cover 100 is formed on the peripheral surface of the lower module plate 110.

The concave accommodation portion 102 includes lateral inner walls 103 facing each other with the projection piece 111 disposed therebetween and an upper inner wall 104 which is continuous to the lateral inner walls 103 and faces the upper surface of the projection piece 111. Moreover, a projecting wall 104a is formed on the upper inner wall 104 so as to project downward from a position closer to the inner side in the radial direction than the outer surface of the cover 100.

A gap is defined between each lateral inner wall 103 of the concave accommodation portion 102 and the projection piece 111, and the gaps function as first filling regions R1 in which the adhesive agent W is filled. Moreover, a gap is also defined between the upper inner wall 104 of the concave accommodation portion 102, the upper surface of the projection piece 111, and the projecting wall 104a, and the gap functions as a second filling region R2 in which the adhesive agent W is filled.

Subsequently, when the lower module plate 110 and the cover 100 are attached and fixed, the cover 100 is first put on the lower module plate 110 so that the projection pieces 111 of the lower module plate 110 are accommodated in the respective concave accommodation portions 102, whereby the lower module plate 110 and the cover 100 are assembled together. Subsequently, the distal end of a needle (not shown) of an adhesive agent discharger is positioned at one of the first filling regions R1 as depicted by the arrow N shown in Fig. 19, and then, the needle is moved along the arrow while discharging the adhesive agent W. That is, the needle is moved from one of the first filling regions R1 to the other first filling region R1 via the second filling region R2.

In this way, it is possible to fill the adhesive agent W into the first and second filling regions R1 and R2, and as shown in Fig. 18, the lower module plate 110 and the cover 100 are integrally attached and fixed.

However, as described above, since the cover has a role of the exterior body of the driving module, the external dimensions of the cover become the external dimensions of the driving module. Therefore, at present, the external dimensions of the cover are controlled with strict accuracy so as to maintain the predetermined dimensional accuracy of a product.

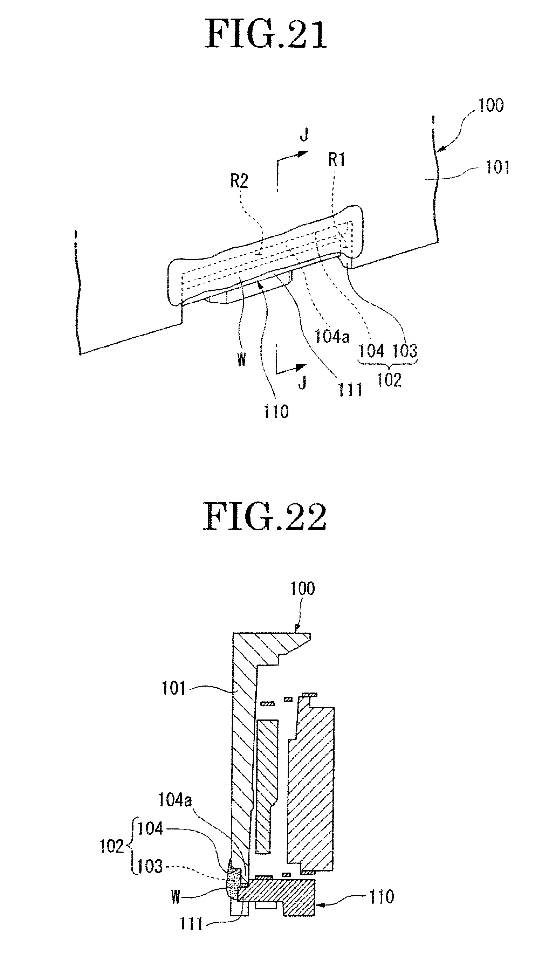

However, in the method of the related art, when an error occurs in the position adjustment of the needle or the like, as shown in Figs. 21 and 22, the adhesive agent W runs out of the first and second filling regions R1 and R2 and is applied to the outer surface of the peripheral wall 101 of the cover 100.

Particularly, as the size of the driving module is decreased further, the diameter of the needle becomes greater than the width of the first and second filling regions R1 and R2. Thus, the adhesive agent W is likely to run out of the first and second filling regions R1 and R2 and to be applied to the outer surface of the cover 100.

In addition, since the adhesive agent requires viscosity of a certain level or more, the adhesive agent is likely to clog the needle when the needle diameter decreases. Thus, the above-mentioned problems occur. If an adhesive agent having low viscosity is used to enable the use of a narrower needle diameter, the applied adhesive agent may flow into the inner side of a product and cause malfunction. Therefore, viscosity of a certain level or more is required for an adhesive agent, and accordingly, it is difficult to decrease the needle diameter.

As described above, since the adhesive agent requires viscosity of a certain level or more, the adhesive agent is not easily separated from the needle. Thus, a lot of adhesive agent tends to be applied at the start and end of the application. Therefore, the adhesive agent is likely to run particularly out of the first filling regions R1, and the possibility of being applied to the outer surface of the cover 100 near the first filling regions R1 is high.

As described above, in the driving module of the related art, since the adhesive agent is likely to be applied to the outer surface of the cover, it is necessary to control the applied amount, the application range, the viscosity, and the like of the adhesive agent. Thus, the manufacturing process is complicated, and the manufacturing cost is likely to increase.

Moreover, a product in which the adhesive agent is applied to the outer surface of the cover results in a defective product of which the dimensions are outside the allowable product dimension range, which decreases the yield ratio.

Furthermore, the adhesive agent applied to the outer surface of the cover may break other driving modules or may peel off due to contact or the like in the course of manufacturing or transferring, which also decreases the yield ratio.

The invention has been made in view of the above problems, and an object of the invention is to provide a driving module in which an adhesive agent is not likely to be applied to the outer surface of an exterior cover, and the control of processes associated with the adhesive agent is simplified, and which is capable of reducing the manufacturing cost and improving the yield ratio, and an electronic device having the driving module.

The invention provides the following means in order to solve the problems.
(1) A driving module according to the invention includes: a support member fixed on a base substrate; a driven member arranged so as to be movable back and forth in a certain direction in relation to the support member; driving means for driving the driven member; and an exterior cover attached so as to cover the support member, the driven member, and the driving means and attached and fixed to the base substrate, wherein a projection piece which protrudes toward the outer side of a radial direction and which is accommodated in a concave accommodation portion formed in the exterior cover is formed on the base substrate, wherein the base substrate and the exterior cover are attached and fixed by an adhesive agent filled in a first filling region which is defined between a lateral inner wall of the concave accommodation portion and a side surface of the projection piece and a second filling region which is defined between an upper inner wall of the concave accommodation portion and an upper surface of the projection piece, and wherein a lateral step portion which is formed to be recessed in relation to an outer surface in a state of being continuous to the lateral inner wall of the concave accommodation portion and to which the adhesive agent running out of the first filling region is guided is formed on the exterior cover.

According to the driving module of the invention, when the exterior cover and the base substrate are attached and fixed in the manufacturing and assembling step, it is possible to suppress the adhesive agent from being applied to the outer surface of the exterior cover.

That is, the exterior cover is attached so as to cover the support member, the driven member, and the driving means to thereby assemble the exterior cover and the base substrate with each other. In this case, the projection piece formed on the base substrate is assembled so as to be accommodated in the concave accommodation portion of the exterior cover. Subsequently, the adhesive agent is discharged into one of the first filling region using a needle or the like so as to flow into the other first filling region through the second filling region. In this way, it is possible to fill the adhesive agent into the first and second filling regions and to reliably attach and fix the exterior cover and the base substrate to each other.

In particular, since the lateral step portion is formed on the exterior cover, even when the discharged adhesive agent runs out of the first filling region during the attaching step, it is possible to forcibly guide the overflowed adhesive agent toward the lateral step portion. Thus, it is possible to prevent the overflowed adhesive agent from running over the outer surface of the exterior cover.

Therefore, it is possible to suppress the adhesive agent from being applied to the outer surface of the exterior cover, and the external dimensions of the exterior cover, namely the product dimensions of the driving module are not likely to be changed by the adhesive agent. In addition, since the thickness of the overflowed adhesive agent can be absorbed by the step of the lateral step portion, the adhesive agent is not likely to overflow the outer surface of the exterior cover. In this respect, the product dimensions of the driving module are not likely to change.

Particularly, although a lot of adhesive agent is likely to be discharged at the start and end of the application due to poor separation properties resulting from viscosity, since the lateral step portion is formed to be continuous to the lateral inner wall of the concave accommodation portion that defines the first filling region, the adhesive agent can effectively escape to the lateral step portion.

As described above, since the adhesive agent is not likely to be applied to the outer surface of the exterior cover, and the product dimensions are not likely to be changed by the adhesive agent, it is possible to obtain a high-quality driving module having the dimensions as designed and to improve the yield ratio. Moreover, it is possible to simplify the control items associated with the adhesive agent further than the related art and reduce the manufacturing cost.
(2) In the driving module of the invention, the lateral step portion may be formed along the lateral inner wall of the concave accommodation portion.

In this case, since the lateral step portion is formed along the lateral inner wall of the concave accommodation portion, it is possible to effectively cause the adhesive agent running out of the first filling region to flow into the lateral step portion. Thus, it is possible to effectively suppress the adhesive agent from overflowing and being applied to the outer surface of the exterior cover.
(3) In the driving module of the invention, the lateral step portion may be sloped so that the depth thereof decreases gradually as it goes away from the lateral inner wall of the concave accommodation portion.

In this case, since the lateral step portion is sloped, when the adhesive agent running out of the first filling region flows therein, the adhesive agent climbs up the slope as it moves away from the concave accommodation portion. Therefore, it is easy to suppress the adhesive agent from flowing over the lateral step portion and reaching the outer surface of the exterior cover and to keep the adhesive agent stored in the lateral step portion.
(4) In the driving module of the invention, an upper step portion which is formed to be recessed in relation to an outer surface in a state of being continuous to the upper inner wall of the concave accommodation portion and to which the adhesive agent running out of the second filling region is guided may be formed on the exterior cover.

In this case, since the upper step portion is further formed on the exterior cover, even when the discharged adhesive agent runs out of the second filling region during the attaching step, it is possible to forcibly guide the overflowed adhesive agent to the upper step portion. Thus, it is possible to prevent the overflowed adhesive agent from running over the outer surface of the exterior cover. Therefore, it is possible to suppress the adhesive agent from being applied to the outer surface of the exterior cover more effectively.
(5) In the driving module of the invention, the upper step portion may be formed along the upper inner wall of the concave accommodation portion and may be communicated with the lateral step portion so as to surround the concave accommodation portion in collaboration with the lateral step portion.

In this case, the upper step portion is formed along the upper inner wall of the concave accommodation portion, the upper step portion and the lateral step portion are communicated with each other, and both step portions reciprocally surround the concave accommodation portion. Therefore, it is possible to effectively guide the adhesive agent running out of the second filling region to the upper step portion. Moreover, even when the adhesive agent overflows near the boundary between the first and second filling regions, it is possible to reliably guide the overflowed adhesive agent to the lateral step portion and the upper step portion.
(6) In the driving module of the invention, the upper step portion may be configured as a slope surface of which the depth decreases gradually as it goes away from the upper inner wall of the concave accommodation portion.

In this case, since the upper step portion is sloped, when the adhesive agent running out of the second filling region flows therein, the adhesive agent climbs up the slope as it moves away from the concave accommodation portion. Therefore, it is easy to suppress the adhesive agent from flowing over the upper step portion and reaching the outer surface of the exterior cover and to keep the adhesive agent stored in the upper step portion.
(7) In the driving module of the invention, the lateral inner wall and the upper inner wall of the concave accommodation portion may be sloped so as to be gradually separated from the projection piece as they advance from the inner surface side of the exterior cover toward the outer surface side thereof.

In this case, since the inlet portions of the first and second filling regions can be widened, it is easy to fill the adhesive agent into both filling regions while suppressing overflowing. Moreover, since the filled adhesive agent is likely to stay in the first and second filling regions due to the slope of the lateral inner wall and the upper inner wall, it is easy to decrease the amount of overflowing.
(8) In the driving module of the invention, the projection piece may have an upper surface which is sloped so that a thickness of the projection piece gradually decreases as it advances toward a distal end side.

In this case, since the slope of the projection piece increases the volume of the second filling region, it is possible to suppress the amount of overflowing of the adhesive agent from the second filling region and to suppress the adhesive agent from running around the lower surface side of the projection piece. That is, it is possible to suppress the adhesive agent from running around the lower surface side of the base substrate and to prevent the adhesive agent from affecting the attachment of the driving module.
(9) In the driving module of the invention, a depressed portion that is open to an upper surface side may be formed on the projection piece.

In this case, since the depressed portion increases the volume of the second filling region, the same operational effect as above can be obtained. That is, it is possible to suppress the amount of overflowing of the adhesive agent from the second filling region. Moreover, it is possible to suppress the adhesive agent from running around the lower surface side of the base substrate and to prevent the adhesive agent from affecting the attachment of the driving module.
(10) An electronic device according to the invention includes the driving module of the invention.

According to the electronic device of the invention, since it includes the driving module in which the adhesive agent is not likely to be applied to the outer surface of the exterior cover, and it is possible to realize dimensions as designed and to achieve high quality and decrease the cost, it is possible to provide an electronic device which has a high quality and is not expensive.

According to the driving module of the invention, since the adhesive agent is not likely to be applied to the outer surface of the exterior cover, it is possible to realize dimensions as designed and to achieve high quality and improve the yield ratio. Moreover, it is possible to simplify the control items associated with the adhesive agent further than the related art and reduce the manufacturing cost.

Moreover, according to the electronic device of the invention, since it has the driving module, it is possible to provide an electronic device which has high quality and is not expensive.

Embodiments of the present invention will now be described by way of further example only and with reference to the accompanying drawings, in which:
Fig. 1 is an external perspective view of a driving module according to an embodiment of the invention.
Fig. 2 is an exploded perspective view of the driving module shown in Fig. 1;
Fig. 3 is an exploded perspective view showing the configuration of a driving unit that constitutes the driving module shown in Fig. 2;
Fig. 4 is an external perspective view of the driving unit that constitutes the driving module shown in Fig. 2;
Fig. 5 is a cross-sectional view taken along the line A-A shown in Fig. 4;
Fig. 6 is a partially enlarged perspective view showing a state where a cover and a lower module plate shown in Fig. 2 are assembled together;
Fig. 7 is a cross-sectional view taken along the line B-B shown in Fig. 6;
Fig. 8 is a view showing a state where the cover and the lower module plate being in the state shown in Fig. 7 are attached and fixed using an adhesive agent;
Fig. 9 is a cross-sectional view taken along the line C-C shown in Fig. 8;
Fig. 10 is a partially enlarged perspective view showing the state where the cover and the lower module plate are assembled together and is a view showing a modified example of a lateral step portion and an upper step portion;
Fig. 11 is a cross-sectional view taken along the line D-D shown in Fig. 10;
Fig. 12 is a partially enlarged perspective view showing the state where the cover and the lower module plate are assembled together and is a view showing a modified example of a lateral inner wall and an upper inner wall;
Fig. 13 is a cross-sectional view taken along the line E-E shown in Fig. 12;
Fig. 14 is a partially enlarged perspective view showing the state where the cover and the lower module plate are assembled together and is a view showing a modified example of a projection piece on the lower module plate;
Fig. 15 is a cross-sectional view taken along the line F-F shown in Fig. 14;
Fig. 16 is a partially cross-sectional view showing the state where the cover and the lower module plate are assembled together and is a view showing another modified example of the projection piece on the lower module plate;
Figs. 17A to 17C are views of an electronic device according to an embodiment of the invention, in which Fig. 17A is an external perspective view of the front surface thereof, Fig. 17B is an external perspective view of the rear surface thereof, and Fig. 17C is a cross-sectional view taken along the line G-G in Fig. 17B;
Fig. 18 is an external perspective view of a driving module according to the related art;
Fig. 19 is a partially enlarged perspective view showing a state where a cover and a lower module plate shown in Fig. 18 are assembled together;
Fig. 20 is a cross-sectional view taken along the line H-H shown in Fig. 19;
Fig. 21 is a perspective view showing a state where an adhesive agent is applied in the state shown in Fig. 19; and
Fig. 22 is a cross-sectional view taken along the line J-J shown in Fig. 21.

### (Driving Module)

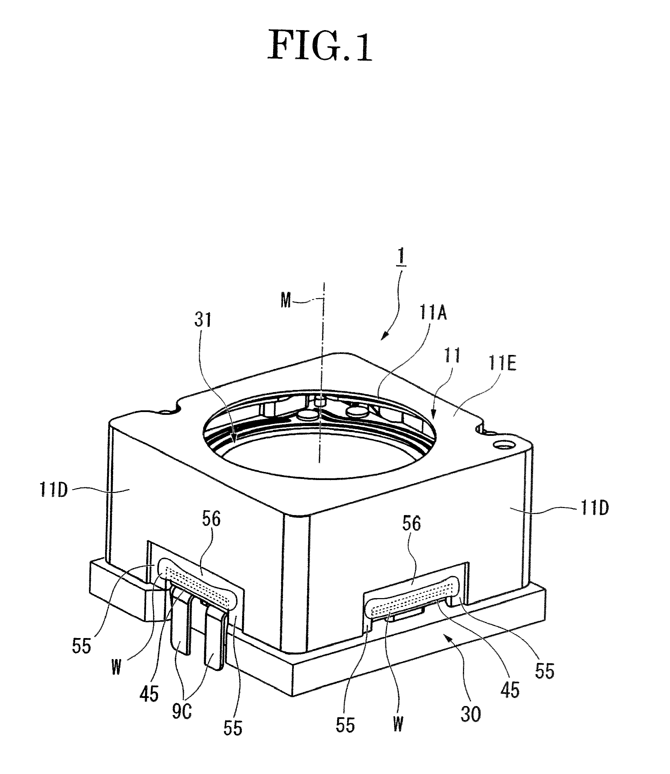

Hereinafter, an embodiment of a driving module according to the invention will be described with reference to Figs. 1 to 16. In the present embodiment, a driving module that drives an imaging lens unit in a camera will be described as an example. Moreover, a case in which a shape memory alloy wire is used as an example of an actuator that drives the lens unit will be described as an example.

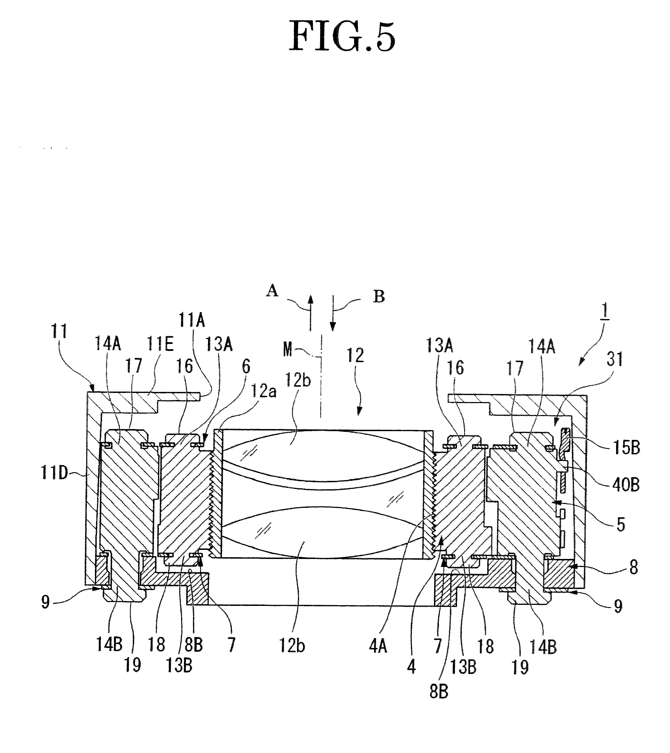

In the present embodiment, in some drawings, for better understanding of the drawings, illustrations of constituent members such as a lens unit 12 shown in Fig. 5 are appropriately omitted.

Moreover, symbol M in drawings, for example, Fig. 1, is an imaginary axial line of a driving module 1 which is identical to the optical axis of the lens unit 12, and indicates a direction in which a lens frame 4 described later is driven. In the following description, the positions and directions of exploded respective components are sometimes referenced based on the positional relation with the axial line M during assembling. For example, even when the respective components have no definite circle or cylindrical surface, as long as there is no chance of misunderstanding, the direction extending along the axial line M will be sometimes referred to simply as an "axial direction," the direction extending around the axial line M to simply as a "radial direction," and the direction revolving around the axial line M to simply as a "circumferential direction." Moreover, the side of the axial direction closer to an adapter 30 will be referred to as a "lower side," and the opposite side will be referred to as an "upper side."

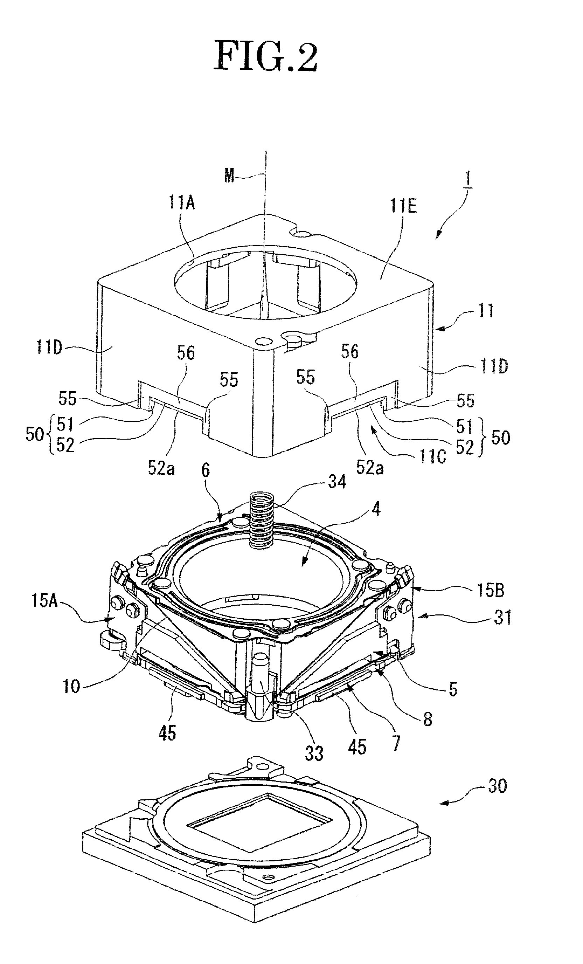

As shown in Figs. 1 and 2, the driving module 1 of the present embodiment is configured to move the lens unit (see Fig. 5) 12 back and forth along the axial direction. The driving module 1 is attached to an electronic device or the like and fixed to a control substrate (not shown) that supplies a control signal and power to the driving module 1. Moreover, the driving module 1 includes the adapter 30 positioned on the control substrate, a driving unit 31 arranged on the adapter 30, and a cover (exterior cover) 11 arranged so as to cover the driving unit 31.

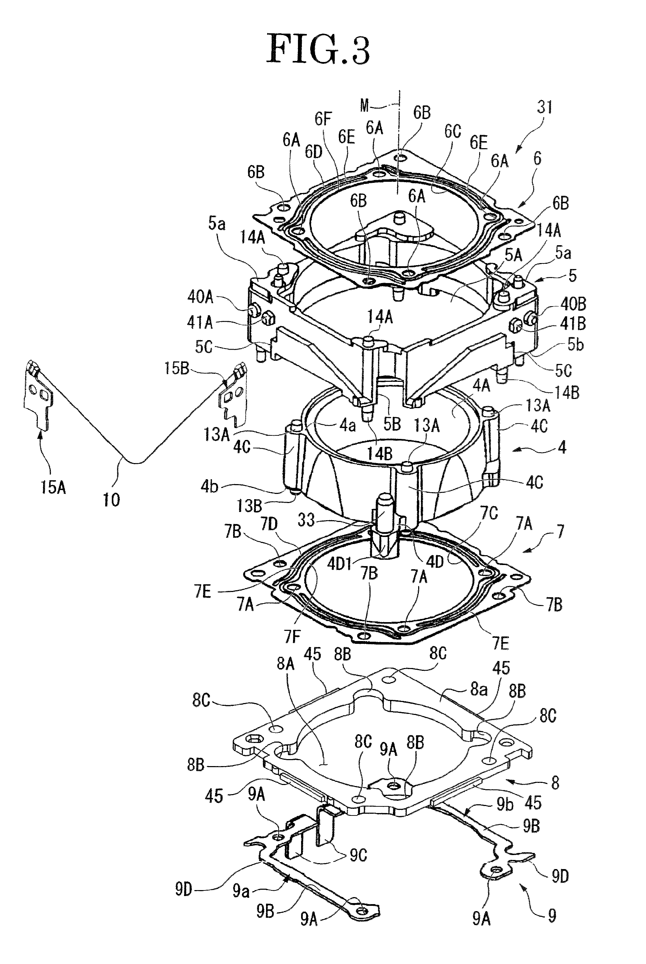

As shown in Figs. 3 to 5, the driving unit 31 is mainly configured to include a lens frame (driven member) 4, a module frame (support member) 5, an upper plate spring 6, a lower plate spring (holding member) 7, a lower module plate (base substrate) 8, a power feeding member 9, a shape memory alloy (hereinafter shortly referred to as SMA) wire 10. These respective components are assembled integrally to form one actuator.

First, the driving unit 31 will be described briefly. As shown in Figs. 3 to 5, the lens frame 4 is inserted in the inner side of the module frame 5 so as to be movable in the axial direction. The upper plate spring 6 is arranged on the upper end portions of the lens frame 4 and the module frame 5. The lower plate spring 7 is arranged on the lower end portions of the lens frame 4 and the module frame 5. Moreover, the lens frame 4 and the module frame 5 are interposed between the upper plate spring 6 and the lower plate spring 7.

The upper plate spring 6 is fixed to the respective upper end portions of the lens frame 4 and the module frame 5 by swaging. Moreover, the lower module plate 8 is stacked under the lower plate spring 7, and the power feeding member 9 is further stacked under the lower module plate 8. The lower plate spring 7, the lower module plate 8, and the power feeding member 9 are fixed to the lower end portion of the module frame 5 by swaging, and the lower plate spring 7 is further fixed to the lower end portion of the lens frame 4 by swaging.

Next, respective components of the driving unit 31 will be described in detail.

First, the lens frame 4 is an approximately circular cylindrical member which extends along the axial direction with the central axis line thereof identical to the axial line M. A female thread is formed on the inner circumferential surface of an accommodating portion 4A which penetrates in the axial direction and which has a circular shape in a cross-sectional view thereof (see Fig. 5). Moreover, the lens unit 12 is threadably mounted on the inner circumferential surface of the accommodating portion 4A using the female thread. In this way, the lens unit 12 is held by the lens frame 4.

In addition, as shown in Fig. 5, the lens unit 12 is configured to include a cylindrical barrel 12a in which a male thread configured to threadably engage with the female thread is formed on an outer circumferential surface thereof and a lens 12b that is engaged at the inner side of the barrel 12a.

As shown in Figs. 3 to 5, protrusions 4C which protrude toward the outer side of the radial direction at intervals of approximately 90 degrees in the circumferential direction are formed on the outer wall of the lens frame 4 so as to extend in the axial direction. An upper fixing pin 13A and a lower fixing pin 13B are assembled on an upper end surface 4a and a lower end surface 4b of each of the respective protrusions 4C, respectively.

Among them, the upper fixing pins 13A are configured to hold the upper plate spring 6, and the lower fixing pins 13B are configured to hold the lower plate spring 7.

Since the upper fixing pin 13A and the lower fixing pin 13B are disposed at the same axis position parallel to the axial line M, the insertion positions of the upper fixing pin 13A and the lower fixing pin 13B in the upper plate spring 6 and the lower plate spring 7 are the same.

In addition, the positions of the upper fixing pin 13A and the lower fixing pin 13B in a plan view thereof may be different. For example, the upper fixing pin 13A may be assembled on the upper end surface 4a of each of two protrusions 4C of the four protrusions 4C, and the lower fixing pin 13B may be assembled on the lower end surface 4b of each of the remaining two protrusions 4C.

Moreover, a guide projection 4D that catches the SMAwire 10 is formed on the lens frame 4 so as to protrude outward in the radial direction. The guide projection 4D is integrally bonded to the outer circumferential surface of one lower end portion of the plurality of protrusions 4C, and a distal-end key portion (latching portion) 4D1 in which the SMA wire 10 is caught and latched is formed. The distal-end key portion 4D1 is configured to lift the lens frame 4 upward to be moved upward along the axial direction when the SMA wire 10 caught therein is contracted.

Moreover, a spring holding portion 33 that holds a coil spring (see Fig. 2) 34 that biases the lens frame 4 downward is formed on the lens frame 4. The spring holding portion 33 is a columnar convex portion assembled on the upper end surface of the guide projection 4D, and the coil spring 34 is fitted to the spring holding portion 33. In this way, it is possible to suppress the occurrence of a movement wherein the SMA wire 10 is contracted by the effect of a surrounding environment or the like to lift the lens frame 4.

The lens frame 4 is formed by integral molding using a thermoplastic resin which allows hot swaging or ultrasonic swaging, such as, for example, a polycarbonate (PC) resin and a liquid crystal polymer (LCP) resin.

The module frame 5 is a cylindrical member which extends along the axial direction with the central axis line thereof identical to the axial line M, and generally has an approximately rectangular outline in a plan view thereof. An accommodating portion 5A which penetrates in the axial direction and which has a circular shape in a cross-sectional view thereof is formed at the central portion thereof. Moreover, the lens frame 4 is accommodated in the accommodating portion 5A.

An upper end surface 5a and a lower end surface 5b extending along an imaginary plane orthogonal to the axial line M are formed at four upper and lower corners of the module frame 5, respectively. Moreover, an upper fixing pin 14A is formed on each upper end surface 5a so as to protrude upward, and a lower fixing pin 14B is formed on each lower end surface 5b so as to protrude downward.

The upper fixing pins 14A are configured to hold the upper plate spring 6, and the lower fixing pins 14B are configured to hold the lower plate spring 7, the lower module plate 8, and the power feeding member 9.

Although the position of the upper fixing pin 14A in the plan view thereof may be different from the position of the lower fixing pin 14B, in the present embodiment, they are disposed at the same axis position parallel to the axial line M. Therefore, the insertion positions of the upper fixing pin 14A and the lower fixing pin 14B in the upper plate spring 6 and the lower plate spring 7 are the same. Moreover, the distance between the upper end surface 5a and the lower end surface 5b is set to be the same as the distance between the upper end surface 4a and the lower end surface 4b of the lens frame 4.

A notch 5B in which a groove width in a plan view thereof has a size such that the notch 5B engages with the guide projection 4D of the lens frame 4 so as to be movable in the axial direction is formed on one lower corner of the module frame 5. The notch 5B is configured such that when the lens frame 4 is inserted and accommodated in the module frame 5 from the lower side, the guide projection 4D of the lens frame 4 passes through the notch 5B, the distal-end key portion 4D1 of the guide projection 4D protrudes outside in the radial direction of the module frame 5, and the alignment of the lens frame 4 in the circumferential direction is realized.

Moreover, on two corners adjacent to the notch 5B of the module frame 5, a pair of latching grooves 5C for attaching wire holding members (holding terminals) 15A and 15B that hold the SMA wire 10 is formed on the same side surface as the corner in which the notch 5B is formed.

Moreover, reference pins 40A and 40B and anti-rotation pins 41 A and 41 B are formed in a line in the circumferential direction at the arrangement positions of the wire holding members 15A and 15B on the side surfaces of the module frame 5. The reference pins 40A and 40B have a circular shape in a plan view thereof. On the other hand, the anti-rotation pins 41A and 41B have a shape such that the upper and lower portions thereof have an approximately circular arc-like shape in a plan view thereof, and the remaining contour portion has a straight-line shape.

Similarly to the lens frame 4, the module frame 5 is formed by integral molding using a thermoplastic resin which allows hot swaging or ultrasonic swaging, such as, for example, a polycarbonate (PC) resin and a liquid crystal polymer (LCP) resin.

As shown in Fig. 3, the wire holding member 15A is attached to a side surface of the module frame 5 which is adjacent to a side surface on which a pair of terminal portions 9C of the power feeding member 9 is positioned. The wire holding member 15B is attached to a side surface facing the side surface on which the pair of the terminal portions 9C of the power feeding member 9 is positioned.

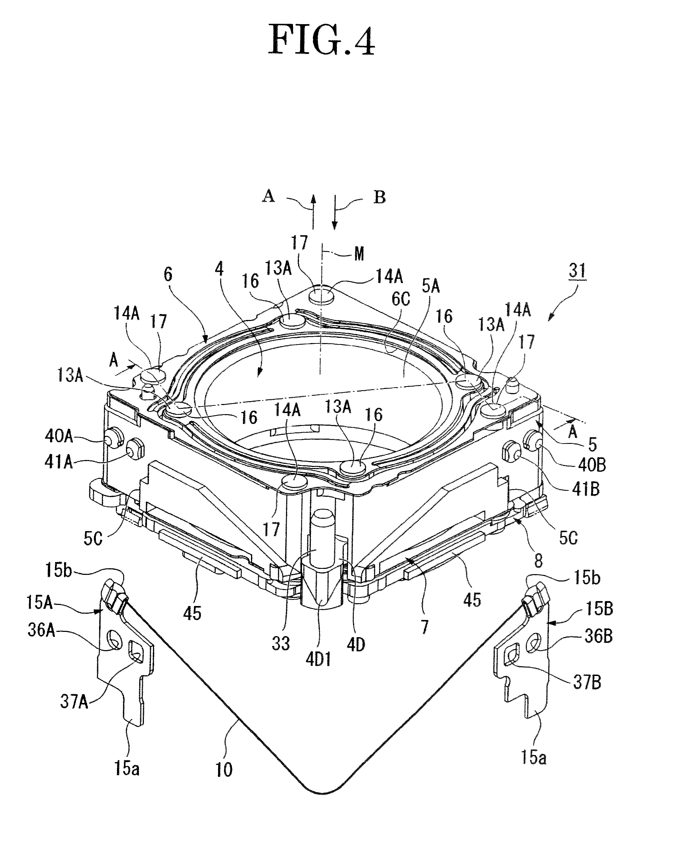

As shown in Fig. 4, the wire holding members 15A and 15B are conductive members such as metal plates which are formed in a key-like shape by swaging the end of the SMA wire 10 to a wire holding portion 15b.

Reference holes 36A and 36B configured to engage with the reference pins 40A and 40B of the module frame 5 and anti-rotation holes 37A and 37B configured to engage with the anti-rotation pins 41A and 41 B are formed in the wire holding members 15A and 15B, respectively. The reference holes 36A and 36B have a circular shape in a plan view thereof, and the anti-rotation holes 37A and 37B have an approximately quadrangular shape in a plan view thereof.

In a state where the wire holding members 15A and 15B are in contact with the latching grooves 5C of the module frame 5, the reference holes 36A and 36B and the anti-rotation holes 37A and 37B are engaged with the reference pins 40A and 40B and the anti-rotation pins 41 A and 41B. In this way, the wire holding members 15A and 15B are aligned with respect to the module frame 5 with high accuracy.

In addition, the head portions of the reference pins 40A and 40B and the anti-rotation pins 41A and 41B are formed so as to have larger diameters than those of the reference holes 36A and 36B and the anti-rotation holes 37A and 37B by hot swaging or the like. Therefore, the wire holding members 15A and 15B are firmly fixed to the module frame 5.

Moreover, the wire holding members 15A and 15B have a flake-shaped terminal portion 15a on the opposite side of the wire holding portion 15b (swaging position) holding the SMA wire 10. In a state where the wire holding members 15A and 15B are attached to the module frame 5, as shown in Fig. 2, the terminal portions 15a protrude slightly toward the lower side of the lower module plate 8 which is stacked under the module frame 5.

Moreover, as shown in Figs. 2 to 4, the SMA wire 10 of which both ends are held by the pair of wire holding members 15A and 15B functions as an actuator (driving means) that exerts a generative force on the guide projection 4D of the lens frame 4 to thereby drive the lens frame 4 in the axial direction while resisting the restoring force of the upper plate spring 6 and the lower plate spring 7.

Specifically, the SMAwire 10 has an intermediate portion which is latched from the lower side to the distal-end key portion 4D1 of the guide projection 4D of the lens frame 4 protruding through the notch 5B of the module frame 5. That is, in a state where the intermediate portion is latched to the distal-end key portion 4D1 of the guide projection 4D, both ends of the SMA wire 10 are fixed to the module frame 5 so as to face each other through the wire holding members 15A and 15B with the axial line M disposed therebetween. Moreover, the lens frame 4 is biased upward through the distal-end key portion 4D1 by the tension of the SMA wire 10. Moreover, the SMA wire 10 has a role of being contracted due to heating when current is supplied through the power feeding member 9 to thereby drive the lens frame 4 in the axial direction while resisting the elastic restoring force of the upper plate spring 6 and the lower plate spring 7.

As shown in Figs. 3 to 5, the upper plate spring 6 and the lower plate spring 7 are stacked above and under the module frame 5 and the lens frame 4 inserted in the module frame 5, respectively. The upper plate spring 6 and the lower plate spring 7 are flat plate springs which are punched approximately in the same shape and are formed of a metal plate such as, for example, stainless (SUS) steel.

The upper plate spring 6 (the lower plate spring 7) has approximately the same rectangular outline in a top view thereof, as the upper (lower) end portion of the module frame 5. A circular opening 6C (7C) which is slightly larger than the accommodating portion 4A of the lens frame 4 is formed at the central portion on the same axis as the axial line M. Generally, the upper plate spring 6 (the lower plate spring 7) has a ring shape.

Four through holes 6B (7B) through which the respective upper fixing pins 14A (the lower fixing pins 14B) can be inserted are formed near the corners of the upper plate spring 6 (the lower plate spring 7) so as to correspond to the arrangement positions of the upper fixing pins 14A (the lower fixing pins 14B) which are formed near the corners of the module frame 5. In this way, alignment with respect to the module frame 5 within a plane orthogonal to the axial line M can be realized.

Moreover, four through holes 6A (7A) through which the respective upper fixing pins 13A (the lower fixing pins 13B) can be inserted are formed on the upper plate spring 6 (the lower plate spring 7) so as to correspond to the arrangement positions of the upper fixing pins 13A (the lower fixing pins 13B) which are formed on the lens frame 4.

Moreover, a ring portion 6F (7F) is formed on the outer side in the radial direction of the opening 6C (7C), and four slits 6D (7D) extending approximately in a semicircular arc-like shape in the circumferential direction from positions near the through holes 6A (7A) facing each other in a diagonal direction with the axial line M disposed therebetween are formed in a state where approximately quadrant parts are superimposed on each other in the radial direction.

In this way, four spring portions 6E (7E) extended in a quadrant shape from a rectangular frame on the outer side of the upper plate spring 6 (the lower plate spring 7) are formed, and these spring portions individually serve as plate spring members which are extended to the vicinities of the through holes 6A (7A).

The lower module plate 8 is configured such that in a state where the respective lower fixing pins 14B of the module frame 5 are inserted into the through holes 7B of the lower plate spring 7, and the respective lower fixing pins 13B of the lens frame 4 accommodated in the module frame 5 are inserted into the through holes 7A of the lower plate spring 7, the lower plate spring 7 is stacked thereon to be interposed between the module frame 5 and the lower module plate 8 from the lower side thereof, so that the rectangular outer frame of the lower plate spring 7 is fixed thereto in a state of being pressed against the lower end surface 5b of the module frame 5.

The lower module plate 8 is a planar member having approximately the same rectangular outline as the module frame 5, and an approximately circular opening 8A having the center at the axial line M is formed at the central portion thereof so as to penetrate in the thickness direction. Moreover, on the side of an upper surface 8a which is stacked on the lower plate spring 7 during assembling, four U-shaped concave portions 8B for preventing interference with swaged portions 18 described later are formed at positions corresponding to the arrangement positions of the lower fixing pins 13B of the lens frame 4.

Moreover, through holes 8C through which the lower fixing pins 14B are inserted are formed on the respective corners positioned at the periphery of the lower module plate 8 so as to correspond to the arrangement positions of the respective lower fixing pins 14B of the module frame 5.

Moreover, four projection pieces 45 which protrude toward the outer side of the radial direction from the outer circumferential surface are formed on the lower module plate 8. As shown in Fig. 2, the projection pieces 45 are plate flakes protruding further outward than the outline of the module frame 5 and are accommodated in concave accommodation portions 50 which are formed on lateral walls 11D of a cover 11 described later.

As the material of the lower module plate 8, a synthetic resin having electrical insulating properties and light blocking properties is used, for example. Moreover, since the lower module plate 8 has electrical insulating properties, the lower module plate 8 serves as an insulation member that fixes the power feeding member 9 in a state of being electrically insulated from the lower plate spring 7.

As shown in Figs. 3 and 5, the power feeding member 9 is configured to include a pair of electrodes 9a and 9b formed of a planar metal plate. The electrodes 9a and 9b are formed of a bent linear metal plate which includes an approximately L-shaped wiring portion 9B extending along the outline of the lower module plate 8 and a terminal portion 9C arranged at the end of the wiring portion 9B.

On each of the wiring portions 9B, two through holes 9A are formed such that among the lower fixing pins 14B of the module frame 5 protruding downward from the lower surface of the lower module plate 8, two lower fixing pins 14B adjacent along the outline of the lower module plate 8 are inserted through the through holes 9A, whereby the electrodes 9a and 9b are aligned with respect to the module frame 5. Moreover, the terminal portions 9C of the electrodes 9a and 9b are formed so as to protrude downward in parallel from side surfaces of the module frame 5 adjacent to a side surface to which the wire holding members 15A are attached.

In one electrode 9a, a conductive connection portion 9D for electrically connecting to the terminal portion 15a of the wire holding member 15A is formed on a side surface on the wiring portion 9B between the through hole 9A and the terminal portion 9C. Moreover, similarly, in the other electrode 9b, a conductive connection portion 9D for electrically connecting to the terminal portion 15a of the wire holding member 15B is formed on a side surface of the wiring portion 9B.

In the conductive connection portions 9D, the electrode 9a is electrically connected to the wire holding member 15A, and the electrode 9b is electrically connected to the wire holding member 15B.

As means for electrically connecting the respective conductive connection portions 9D to the terminal portions 15a, soldering or adhesive bonding using a conductive adhesive agent can be used, for example.

As shown in Figs. 1, 2, and 5, the cover 11 is attached and fixed to the lower module plate 8 so as to cover the driving unit 31 from the upper side.

The cover 11 includes lateral walls 11D surrounding the module frame 5 so as to be externally engaged and a top wall 11E formed to be continuous to the upper end of the lateral walls 11 D. The cover 11 has a cylindrical shape with a top in which a rectangular opening 11C is open to the lower side. A circular opening 11 A of which the center is at the axial line M is formed at the central portion of the top wall 11E. The opening 11A has a size such that the lens unit 12 can enter and exit therethrough.

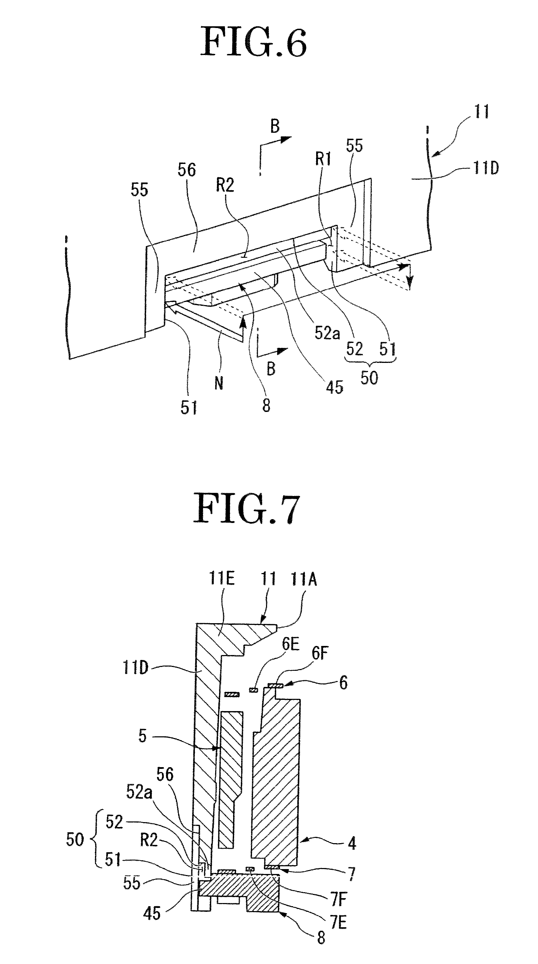

As shown in Figs. 6 and 7, the concave accommodation portion 50 that is open to the lower side is formed at the central portion on the lower end side of each of the respective lateral walls 11 D of the cover 11. The concave accommodation portion 50 has lateral inner walls 51 facing each other and an upper inner wall 52 facing downward. The concave accommodation portion 50 has a rectangular shape in a side view thereof, of which the length in the circumferential direction is long, and the length in the axial direction is short.

A projecting wall 52a which protrudes downward from a position closer to the inner side than the outer surface of the cover 11 while extending along the inner surfaces of the lateral walls 11 D is formed on the upper inner wall 52. The projecting wall 52a restricts the adhesive agent W (see Fig. 1) from entering the inner side of the cover 11.

Moreover, the cover 11 is put on the lower module plate 8 so that the projection pieces 45 of the lower module plate 8 are accommodated in the concave accommodation portions 50. The adhesive agent W is filled between the concave accommodation portion 50 and the projection piece 45 as shown in Fig. 1, whereby the lower module plate 8 and the cover 11 are attached and fixed.

Specifically, as shown in Figs. 6 and 7, a gap serving as the first filling region R1 is defined between the lateral inner wall 51 of the concave accommodation portion 50 and the side surface of the projection piece 45. Moreover, a gap serving as the second filling region R2 is defined between the upper inner wall 52 of the concave accommodation portion 50, the projecting wall 52a, and the upper surface of the projection piece 45. The adhesive agent W is filled into the first and second filling regions R1 and R2, whereby the lower module plate 8 and the cover 11 are attached and fixed.

Moreover, in the lateral walls 11 D of the cover 11 of the present embodiment, lateral step portions 55 and an upper step portion 56 are formed to be continuous in a U shape in a side view thereof so as to surround the concave accommodation portion 50 from the outer side.

The lateral step portion 55 is a portion which is formed to be recessed in relation to the outer surface of the lateral wall 11D in a state of being continuous to the lateral inner wall 51 of the concave accommodation portion 50 and has a role of guiding the adhesive agent W running out of the first filling region R1 thereto. In this case, the lateral step portion 55 is formed along the lateral inner wall 51 of the concave accommodation portion 50.

The upper step portion 56 is a portion which is formed to be recessed in relation to the outer surface of the lateral wall 11D in a state of being continuous to the upper inner wall 52 of the concave accommodation portion 50 and has a role guiding the adhesive agent W running out of the second filling region R2 thereto. Moreover, the upper step portion 56 is formed along the upper inner wall 52 of the concave accommodation portion 50 and is communicated with the lateral step portion 55, whereby the upper step portion 56 and the lateral step portion 55 reciprocally surround the concave accommodation portion 50.

### (Operation of Driving Module)

Next, the operation of the driving module 1 having the above-described configuration will be described.

First, in a state where no power is supplied to the terminal portions 9C, the forces acting on the lens frame 4 such as the tension of the SMA wire 10, the biasing force of the coil spring 34, the restoring force of the upper plate spring 6 and the lower plate spring 7 are in equilibrium. Thus, the lens frame 4 to which the lens unit 12 is attached is held at a certain position in the axial direction.

Here, when the SMA wire 10 is heated through supply of current, the SMA wire 10 is contracted to a length corresponding to a temperature thereof. Specifically, when current is supplied to the power feeding member 9 through the terminal portions 9C, since the electrodes 9a, the wire holding members 15A, the SMAwire 10, the wire holding members 15B, and the electrodes 9b are electrically connected, current flows through the SMA wire 10. In this way, Joule heating occurs in the SMA wire 10, and the temperature of the SMA wire 10 increases. When the temperature exceeds the transformation start temperature of the SMA wire 10, the SMA wire 10 is contracted to a length corresponding to the temperature.

Then, since both ends of the SMA wire 10 are fixed to the module frame 5 through the wire holding members 15A and 15B in a state where the intermediate portion thereof is latched to the guide projection 4D, it is possible to exert a generative force (driving force) to the guide projection 4D through contraction and to move the guide projection 4D upward (a direction denoted by the arrow "A" in Figs. 4 and 5) along the axial direction.

In this way, it is possible to move the lens frame 4 relative to the module frame 5 and to lift the lens frame 4 along the axial direction. Moreover, when the lens frame 4 moves, the upper plate spring 6 and the lower plate spring 7 are deformed, and an elastic restoring force corresponding to the amount of deformation acts on the lens frame 4. Moreover, the movement of the lens frame 4 stops at a position where the elastic restoring force of the upper plate spring 6 and the lower plate spring 7 is in equilibrium with the tension of the SMA wire 10.

Moreover, when the supply of current is halted to stop supplying current to the SMA wire 10, it is possible to expand the SMA wire 10. In this way, it is possible to move the lens frame 4 downward (a direction denoted by the arrow "B" in Figs. 4 and 5) in the opposite direction to the direction previously mentioned.

In this way, by controlling the amount of supplied current, namely the amount of heat generation of the SMA wire 10, it is possible to move the lens frame 4 in two directions (upward and downward directions) along the axial direction.

Although the SMA wire 10 exhibits temperature hysteresis between heating and cooling, this can be dealt with through software-based correction.

### (Assembling of Driving Module)

Next, a method of assembling the driving module 1 will be described.

In the present embodiment, the assembling is realized by six steps of the first to sixth steps.

First, in the first step, the lens frame 4 is inserted from the lower side into the accommodating portion 5A of the module frame 5 so that the upper end surface 5a of the module frame 5 is at the same height as the upper end surface 4a of the lens frame 4. Moreover, the respective upper fixing pins 14A of the module frame 5 and the respective upper fixing pins 13A of the lens frame 4 are inserted through the respective through holes 6B and 6A of the upper plate spring 6, respectively.

Subsequently, the distal ends of the respective upper fixing pins 13A and 14A protruding upward after having passing through the respective through holes 6A and 6B of the upper plate spring 6 are swaged by heater chips (not shown), whereby swaged portions 16 and swaged portions 17 which are first and second fixing portions are formed, respectively (see Figs. 4 and 5).

In this case, swaging can be performed in a state where the upper end surface 4a of the lens frame 4 and the upper end surface 5a of the module frame 5 are arranged on the same plane, and the planar upper plate spring 6 is disposed without being deformed. Therefore, since it is not necessary to press the upper plate spring 6 that tends to deform, it is possible to perform the swaging operation easily. Moreover, it is possible to prevent the occurrence of floating or the like due to deformation of the upper plate spring 6.

Moreover, since the respective heater chips can be positioned at the same height, even when the swaged portions 16 and 17 are formed at the same time, it is possible to reduce fluctuation of swaging accuracy.

The first step ends at this point.

Next, the second step is performed.

First, the respective lower fixing pins 13B of the lens frame 4 are inserted through the respective through holes 7A of the lower plate spring 7. In this case, at the same time as above, the respective lower fixing pins 14B of the module frame 5 are inserted through the respective through holes 7B of the lower plate spring 7, the respective through holes 8C of the lower module plate 8, and the respective through holes 9A of the power feeding member 9. Subsequently, the distal ends of the respective lower fixing pins 13B protruding downward after having passing through the respective through holes 7A of the lower plate spring 7 are swaged by heater chips, whereby swaged portions 18 which are first fixing portions are formed (see Fig. 5).

In this case, since the distance in the axial line direction between the upper end surface 4a and the lower end surface 4b of the lens frame 4 is the same as the distance in the axial line direction between the upper end surface 5a and the lower end surface 5b of the module frame 5, swaging can be performed in a state where the lower end surfaces 4b and 5b are arranged on the same plane, and the lower module plate 8 is stacked without deforming the planar lower plate spring 7. Therefore, it is possible to prevent the occurrence of floating or the like due to deformation of the lower plate spring 7.

Moreover, since the respective heater chips can be positioned at the same height, even when the swaged portions 18 are formed at the same time, it is possible to reduce fluctuation of swaging accuracy.

The second step ends at this point.

Next, the third step is performed.

First, the lower end portions of the respective lower fixing pins 14B protruding downward after having passing through the through holes 7B, 8C, and 9A are swaged by heater chips, whereby swaged portions 19 which are second fixing portions are formed (see Fig. 5).

In this case, since the respective heater chips can be positioned at the same height, even when the swaged portions 19 are formed at the same time, it is possible to reduce fluctuation of swaging accuracy. Moreover, since the concave portions 8B are formed on the lower module plate 8, the swaged portions 18 formed in the second step do not make contact with the lower module plate 8.

The third step ends at this point. Through the first to third steps, it is possible to stack and fix the upper plate spring 6, the lower plate spring 7, the lower module plate 8, and the power feeding member 9 to both ends of the lens frame 4 and the module frame 5.

In addition, since the upper fixing pins 13A and the lower fixing pins 13B are formed at the same axis, and the upper fixing pins 14A and the lower fixing pins 14B are formed at the same axis, the heater chips for forming the swaged portions 16 and 18 and the swaged portions 17 and 19 during the swaging in the first to third steps are positioned at the same position on a plane. Therefore, since it is not necessary to change the positions of the heater chips during the respective swaging steps, it is possible to perform the swaging operation efficiently.

Next, the fourth step is performed.

First, the pair of wire holding members 15A and 15B to which the SMA wire 10 is attached is fixed to the module frame 5. Specifically, the reference pins 40A and 40B and the anti-rotation pins 41A and 41B of the module frame 5 are engaged with the reference holes 36A and 36B and the anti-rotation holes 37A and 37B of the wire holding members 15A and 15B, respectively, while bringing the wire holding members 15A and 15B into contact with the latching grooves 5C formed on the module frame 5.

In this case, the intermediate portion of the SMA wire 10 is latched to the distal-end key portion 4D1 of the guide projection 4D and is caught and stretched so as to support the distal-end key portion 4D1 from the lower side. Moreover, the respective terminal portions 15a of the wire holding members 15A and 15B protrude toward the lower side of the lower module plate 8 and are latched to or disposed near the conductive connection portions 9D of the electrodes 9a and 9b of the power feeding member 9 which is fixed to the lower module plate 8.

The fourth step ends at this point.

Next, the fifth step is performed.

First, the diameters of the head portions of the reference pins 40A and 40B and the anti-rotation pins 41 A and 41 B inserted through the reference holes 36A and 36B and the anti-rotation holes 37A and 37B are increased by swaging or the like. In this way, anti-drop measures are realized, and the module frame 5 and the wire holding members 15A and 15B are tightly fixed to each other. Subsequently, the respective terminal portions 15a are electrically connected to the conductive connection portions 9D using soldering, a conductive adhesive agent, and the like, for example.

The fifth step ends at this point.

Finally, the sixth step is performed.

First, the cover 11 is put on the module frame 5 so as to assemble the cover 11 and the lower module plate 8 together. In this case, as shown in Figs. 6 and 7, the projection pieces 45 formed on the lower module plate 8 are accommodated in the concave accommodation portions 50 of the cover 11.

In this case, the swaged portions 16 and 17 are separated from the top wall 11E of the cover 11 as shown in Fig. 5.

Subsequently, the distal end of a needle (not shown) of an adhesive agent discharger is positioned at one of the first filling regions R1 as depicted by an arrow N shown in Fig. 6, and then, the needle is moved along the arrow while discharging the adhesive agent W. That is, the adhesive agent W is discharged while moving the needle from one of the first filling regions R1 to the other first filling region R1 via the second filling region R2.

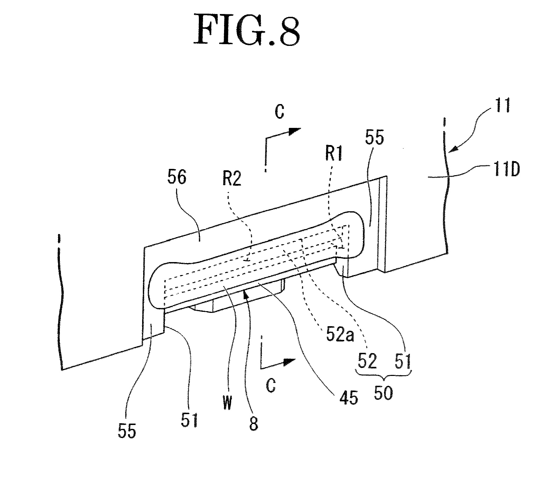

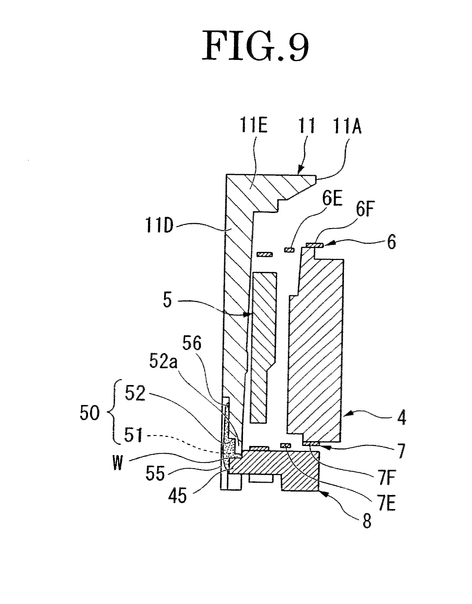

In this way, as shown in Figs. 8 and 9, it is possible to fill the adhesive agent W into the first and second filling regions R1 and R2 and to reliably attach and fix the cover 11 and the lower module plate 8 together.

In this way, the sixth step ends, and the assembling of the driving module body shown in Fig. 1 is completed. Subsequently, the adapter 30 is attached to the lower surface of the lower module plate 8 of the driving unit 31, and is then attached onto a control substrate (not shown). The attachment to the control substrate may be realized using fixing means such as adhesive bonding or squeezing.

The control substrate may be an independent member which is attached to the driving module 1 and may be a member which is connected to or disposed in an electronic device or the like.

Furthermore, the lens unit 12 is screwed and attached to the lens frame 4 through the opening 11 A of the cover 11. The reason why the lens unit 12 is attached at the last stage is to prevent contamination of the lens 12b of the lens unit 12 and dust or the like from adhering thereto during the assembling operation. However, when the driving module 1 is shipped in the state of a product in which the lens unit 12 is attached, or when it is desired to make the opening 11A of the cover 11 smaller than the outline of the lens unit 12, for example, when the opening 11A also serves as an aperture diaphragm, this step may be performed in an earlier stage (before the sixth step).

In the cover 11 of the present embodiment, the lateral step portion 55 and the upper step portion 56 are formed. Therefore, even when the adhesive agent W discharged from the needle runs out of the first and second filling regions R1 and R2 during the attaching operation of the sixth step, it is possible to forcibly guide the overflowed adhesive agent W toward the lateral step portion 55 and the upper step portion 56 as shown in Fig. 8. Thus, it is possible to prevent the overflowed adhesive agent from running over the outer surfaces of the lateral walls 11D of the cover 11.

Therefore, it is possible to suppress the adhesive agent W from being applied to the outer surfaces of the lateral walls 11 D of the cover 11, and the external dimensions of the cover 11, namely the product dimensions of the driving module 1 are not likely to be changed by the adhesive agent W. In addition, since the thickness of the overflowed adhesive agent W can be absorbed by the steps of the lateral step portion 55 and the upper step portion 56, the adhesive agent W is not likely to overflow the outer surfaces of the lateral walls 11D the cover 11 to form protrusions as shown in Fig. 9. In this respect, the product dimensions of the driving module 1 are not likely to change.

As described above, since the adhesive agent W is not likely to be applied to the outer surfaces of the lateral walls 11D of the cover 11, and the product dimensions are not likely to be changed by the adhesive agent W, it is possible to obtain a high-quality driving module 1 having the dimensions as designed and to improve the yield ratio. Moreover, it is possible to simplify the control items associated with the adhesive agent W further than the related art and reduce the manufacturing cost, which leads to realization of a low-cost driving module 1.

Particularly, although a lot of adhesive agent W is likely to be applied at the start and end of application due to poor separation properties resulting from viscosity, since the lateral step portions 55 are formed to be continuous to the lateral inner walls 51 of the concave accommodation portion 50 that defines the first filling region R1, the adhesive agent W can quickly escape to the lateral step portions 55.

Furthermore, since the lateral step portions 55 are formed along the lateral inner walls 51 of the concave accommodation portion 50, the adhesive agent W can effectively escape to the lateral step portions 55. Thus, it is possible to effectively prevent the overflowed adhesive agent from running over and being applied to the outer surfaces of the lateral walls 11D of the cover 11.

Furthermore, the upper step portion 56 is formed along the upper inner wall 52 of the concave accommodation portion 50, the upper step portion 56 and the lateral step portions 55 are communicated with each other, and both step portions 55 and 56 collaborately surround the concave accommodation portion 50. Therefore, it is possible to effectively guide the adhesive agent W running out of the second filling region R2 to the upper step portion 56. Moreover, even when the adhesive agent W overflows near the boundary between the first and second filling regions R1 and R2, it is possible to reliably guide the overflowed adhesive agent W to the lateral step portions 55 and the upper step portion 56.

In particular, since the movement direction of the needle changes at the position near the boundary of the first and second filling regions R1 and R2, although the adhesive agent W is likely to stay there and run out of the first and second filling regions R1 and R2, even when it overflows, the overflowed adhesive agent can reliably escape to the lateral step portions 55 and the upper step portion 56 as described above.

In the above-described embodiment, the depth (step height) of the lateral step portion 55 and the upper step portion 56 is preferably set to be equal to or greater than the thickness of the adhesive agent W by predicting the amount of the adhesive agent W flowing therein based on the viscosity of the used adhesive agent W, the formation range of the first and second filling regions R1 and R2, the size of the needle, and the like.

Moreover, it is preferable to form the lateral step portions 55 and the upper step portion 56 over a wider range of areas than the ranges of the first and second filling regions R1 and R2.

Moreover, since the amount of overflowing of the adhesive agent W and the like can be detected easily and accurately using the lateral step portions 55 and the upper step portion 56, the amount of the adhesive agent W discharged from the needle, the discharging position of the needle, and the like can be appropriately finely adjusted. Moreover, the cover 11 and the lower module plate 8 can be attached and fixed together while suppressing the overflowing of the adhesive agent W as much as possible.

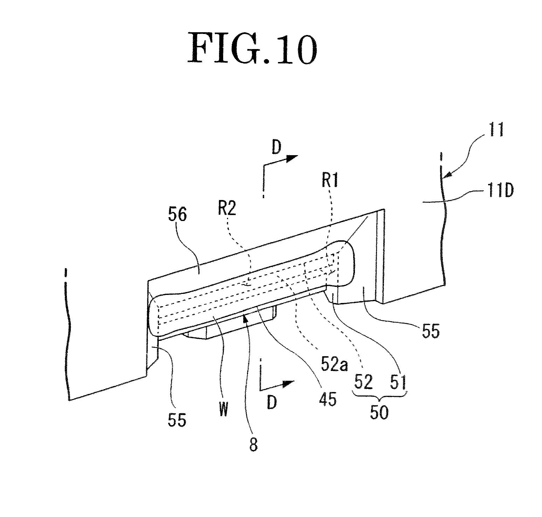

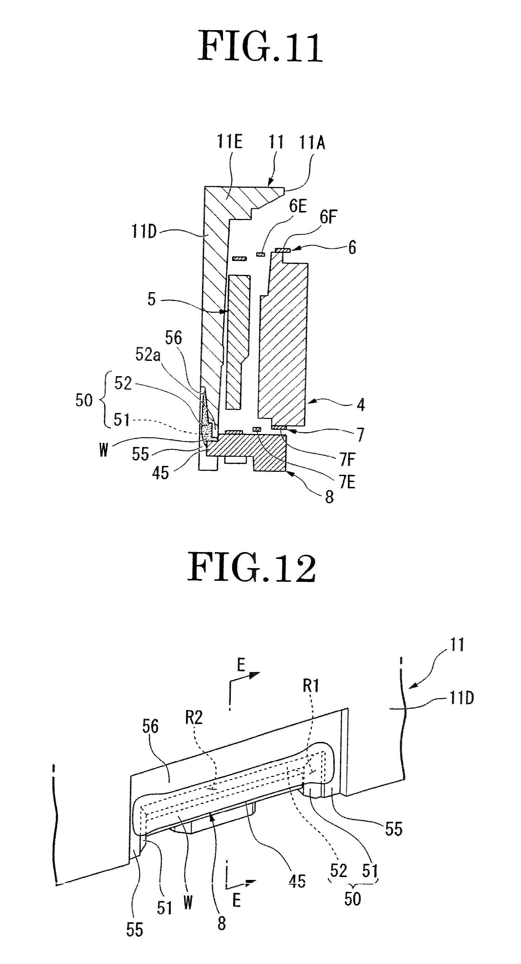

In the above-described embodiment, as shown in Figs. 10 and 11, the lateral step portion 55 and the upper step portion 56 may be sloped.

Specifically, the lateral step portion 55 may be sloped so that the depth thereof decreases gradually as it goes away from the lateral inner wall 51 of the concave accommodation portion 50. The upper step portion 56 may be sloped so that the depth thereof decreases as it goes away from the upper inner wall 52 of the concave accommodation portion 50.

In this case, when the adhesive agent W running out of the first and second filling regions R1 and R2 flows into the lateral step portion 55 and the upper step portion 56, the adhesive agent W climbs up the slope as it moves away from the concave accommodation portion 50.

Therefore, it is easy to suppress the adhesive agent W from flowing over the lateral step portion 55 and the upper step portion 56 and reaching the outer surface of the lateral wall 11 D of the cover 11 and to keep the adhesive agent W stored in the lateral step portion 55 and the upper step portion 56.

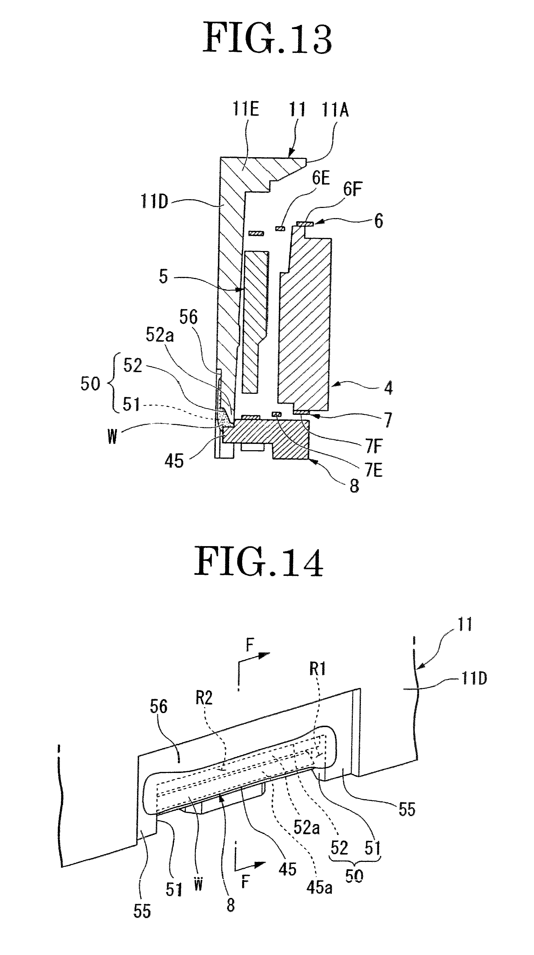

Moreover, in the above-described embodiment, as shown in Figs. 12 and 13, the lateral inner wall 51 and the upper inner wall 52 of the concave accommodation portion 50 may be sloped.

Specifically, the lateral inner wall 51 and the upper inner wall 52 may be sloped so as to be gradually separated from the projection piece 45 as they advance from the inner surface side of the lateral wall 11 D of the cover 11 toward the outer surface side.

In this case, since the inlet portions of the first and second filling regions R1 and R2 can be widened, it is easy to fill the adhesive agent W into both filling regions R1 and R2 while suppressing overflowing. Therefore, it is possible to perform the attaching operation efficiently and to increase the operation efficiency. Moreover, since the filled adhesive agent W is likely to stay in the first and second filling regions R1 and R2 due to the slope of the lateral inner wall 51 and the upper inner wall 52, it is easy to decrease the amount of overflowing.

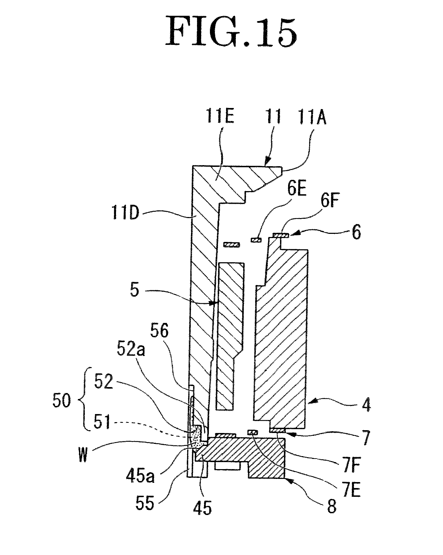

Moreover, in the above-described embodiment, as shown in Figs. 14 and 15, the upper surface side of the projection piece 45 may be sloped to form a slope portion 45a. Specifically, the upper surface side of the projection piece 45 may be sloped to form the slope portion 45a so that the thickness thereof decreases gradually as it advances toward the distal end side.

In this case, since the slope portion 45a of the projection piece 45 increases the volume of the second filling region R2, it is possible to suppress the amount of overflowing of the adhesive agent W from the second filling region R2 and to suppress the adhesive agent W from running around the lower surface side of the projection piece 45. That is, it is possible to suppress the adhesive agent W from running around the lower surface side of the lower module plate 8 and to prevent the adhesive agent W from affecting the attachment to the adapter 30.

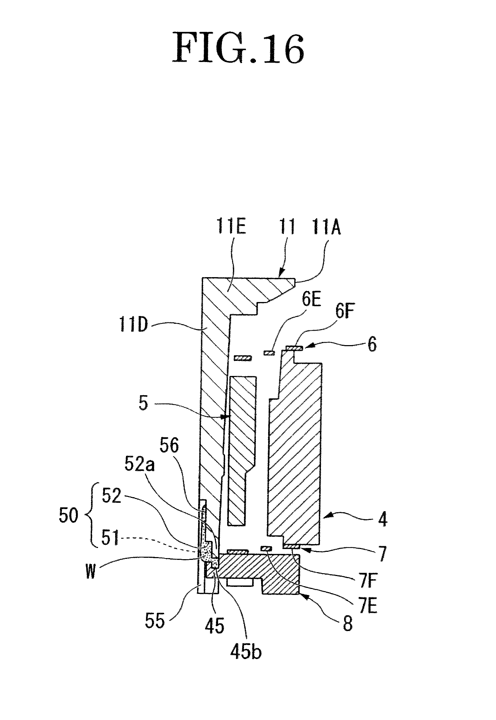

Moreover, in the above-described embodiment, as shown in Fig. 16, a depressed portion 45b open to the upper surface side of the projection piece 45 may be formed. In this case, the depressed portion 45b may be formed in a groove shape extending over approximately the entire length of the projection piece 45, and a plurality of depressed portions 45b may be formed in an intermittent manner so as to be aligned in a line at intervals.

In this case, it is possible to obtain the same operational effect as that when the upper surface side of the projection piece 45 is sloped.

### (Electronic Device)

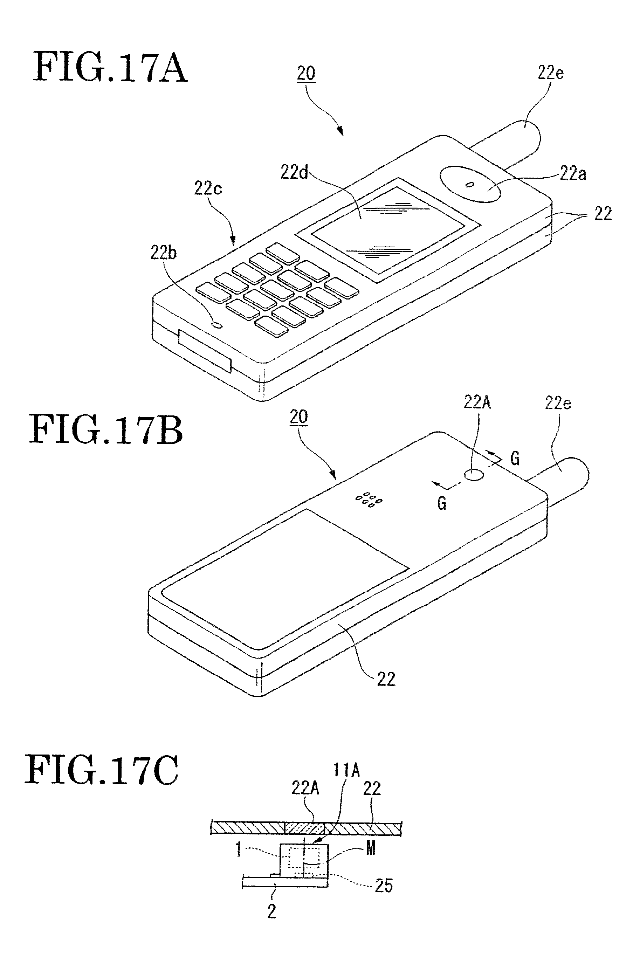

Next, an electronic device according to an embodiment of the invention will be described with reference to Figs. 17A to 17C.

In the present embodiment, a mobile camera phone having the driving module 1 of the above-described embodiment will be described as an example of the electronic device.

As shown in Fig. 17A, a mobile camera phone 20 of the present embodiment includes an ear piece 22a, a mouth piece 22b, an operation section 22c, a liquid crystal display section 22d, an antenna section 22e, and a well-known electronic section of a mobile phone such as a control circuit section (not shown), which are provided on the inside and the outside of a cover 22.

As shown in Fig. 17B, a window 22A through which outside light passes is formed on the rear surface side of the cover 22 where the liquid crystal display section 22d is provided. Moreover, as shown in Fig. 17C, the driving module 1 is provided so that the opening 11A of the driving module 1 faces the window 22A of the cover 22 and the axial line M extends along the normal direction of the window 22A.

In this case, the driving module 1 is mechanically and electrically connected to the substrate 2. The substrate 2 is connected to a control circuit section (not shown) and is configured to supply power to the driving module 1.

Due to such a configuration, light having passed through the window 22A can be collected by the lens unit 12 (not shown) of the driving module 1 and imaged on an imaging device 25. Moreover, by supplying appropriate power from the control circuit section to the driving module 1, it is possible to drive the lens unit 12 in the axial line M direction and adjust a focus position to perform capturing.

In particular, since the mobile camera phone 20 includes the driving module 1 in which the adhesive agent W is not likely to be applied to the outer surface of the cover 11, which has dimensions as designed and high quality and is not expensive, it is possible to provide the mobile camera phone 20 which has a high quality and is not expensive.

The technical scope of the invention is not limited to the embodiments above, and the invention can be modified in various ways.

For example, in the above-described embodiment, the lens frame 4 is driven in the axial direction by applying a generative force to the guide projection 4D using the SMA wire 10. However, the invention is not limited to this, and the lens frame 4 may be driven using driving means such as a solenoid or a piezoelectric actuator.

Moreover, in the above-described embodiment, a case in which the upper fixing pins 13A and 14A and the lower fixing pins 13B and 14B are inserted through the upper plate spring 6 and the lower plate spring 7 which are plate spring members for biasing the lens frame 4, and the distal ends of the fixing pins are swaged has been described. However, the method of fixing the plate spring members is not limited to this. For example, the plate spring members may be fixed by ultrasonic swaging or the like and may be adhesively bonded to the lens frame 4 and the module frame 5. In this case, since a large attachment area can be secure, it is possible to obtain a large strength even when an adhesive agent is used.

Moreover, in the above-described embodiment, although the lens frame 4 is elastically held using the upper plate spring 6 and the lower plate spring 7, the invention is not limited to the spring member, and other holding members may be used as long as they can elastically hold the lens frame 4.

Moreover, in the above-described embodiment, although the module frame 5 has been described as an approximately rectangular member, the shape of the module frame 5 is not limited to the approximately rectangular shape and may be a polygonal shape.

Moreover, in the above-described embodiment, although a case in which the driving module 1 is used for a mechanism for adjusting the focus position of the lens unit 12 has been described, the use of the driving module 1 is not limited to this. For example, the driving module 1 may be used in other applications such as an appropriate actuator that moves a driven member to a target position. For example, the driving module 1 may be used as an appropriate actuator by threadably mounting a rod member or the like instead of the lens unit 12 and changing the shape of the lens frame 4. That is, the driven member is not limited to a barrel-shaped member but may be a columnar member.

Moreover, in the above-described embodiment, although the mobile camera phone 20 has been described as an example of the electronic device which uses the driving module 1, the type of the electronic device is not limited to this. For example, the driving module 1 may be used in an optical device such as a digital camera or a camera built into a PC and may be used in an actuator that moves a driven member to a target position in an electronic device such as an information reader and storage device or a printer.

The foregoing description has been given by way of example only and it will be appreciated by a person skilled in the art that modifications can be made without departing from the scope of the present invention.

## Claims

1. A driving module (1) comprising:
a support member (5) fixed on a base substrate (8);
a driven member (4) arranged so as to be movable back and forth in a certain direction in relation to the support member;
driving means (10) for driving the driven member; and
an exterior cover (11) attached so as to cover the support member, the driven member, and the driving means and attached and fixed to the base substrate,
wherein a projection piece (45) which protrudes toward the outer side in a radial direction and which is accommodated in a concave accommodation portion (50) formed in the exterior cover is formed on the base substrate,
wherein the base substrate and the exterior cover are attached and fixed by an adhesive agent filled in a first filling region (R1) which is defined between a lateral inner wall (51) of the concave accommodation portion and a side surface of the projection piece and a second filling region (R2) which is defined between an upper inner wall (52) of the concave accommodation portion and an upper surface of the projection piece, and
wherein a lateral step portion (55) which is formed to be recessed in relation to an outer surface in a state of being continuous to the lateral inner wall of the concave accommodation portion and to which the adhesive agent running out of the first filling region is guided is formed on the exterior cover.

2. The driving module according to claim 1,
wherein the lateral step portion is formed along the lateral inner wall of the concave accommodation portion.

3. The driving module according to claim 1 or claim 2,
wherein the lateral step portion is sloped so that the depth thereof decreases gradually as it goes away from the lateral inner wall of the concave accommodation portion.

4. The driving module according to any of claims 1 to 3,
wherein an upper step portion (56) which is formed to be recessed in relation to an outer surface in a state of being continuous to the upper inner wall (52) of the concave accommodation portion and to which the adhesive agent running out of the second filling region is guided is formed on the exterior cover.

5. The driving module according to claim 4,
wherein the upper step portion is formed along the upper inner wall of the concave accommodation portion and is communicated with the lateral step portion so as to surround the concave accommodation portion in collaboration with the lateral step portion.

6. The driving module according to claim 4 or claim 5,
wherein the upper step portion is configured as a slope surface of which the depth decreases gradually as it goes away from the upper inner wall of the concave accommodation portion.

7. The driving module according to any of claims 1 to 6,
wherein the lateral inner wall and the upper inner wall of the concave accommodation portion are sloped so as to be gradually separated from the projection piece as they advance from the inner surface side of the exterior cover toward the outer surface side thereof.

8. The driving module according to any of claims 1 to 7,
wherein the projection piece has an upper surface (45a) which is sloped so that a thickness of the projection piece gradually decreases as it advances toward a distal end side.

9. The driving module according to any of claims 1 to 7,
wherein a depressed portion (45b) that is open to an upper surface side is formed on the projection piece.

10. An electronic device (20) comprising the driving module according to any of claims 1 to 9.
